# EUROPÄISCHE PATENTSCHRIFT

(11) **EP 2 180 202 B1**
(45) Veröffentlichungstag und Bekanntmachung des Hinweises auf die Patenterteilung: **08.01.2014**
(21) Anmeldenummer: 08425688.2
(22) Anmeldetag: 24.10.2008
(51) Int. Cl.: F16D 3/223

(54) **Kugelkäfig für ein Gleichlaufdrehgelenk und Verfahren zur Herstellung**
Ball bearing cage for a synchronised swivel joint and method for its manufacture
Cage à billes pour un joint tournant homocinétique et procédé de fabrication

(43) Veröffentlichungstag der Anmeldung: 28.04.2010
(73) Patentinhaber: GKN Driveline Bruneck AG, 39031 Bruneck (IT)
(72) Erfinder: Feichter Bruno, I-39031 Bruneck/Reischach (IT)
(74) Vertreter: Oberwalleney, Stephan

(56) Entgegenhaltungen:
- DE-A1-102005 059 696
- JP-A- 53 131 350

## Beschreibung

Die Erfindung betrifft einen Kugelkäfig für ein Gleichlaufdrehgelenk, insbesondere für ein Gleichlaufverschiebegelenk nach Art eines Doppel-Offset-Gelenks, ein Verfahren zur Herstellung eines solchen Kugelkäfigs sowie ein Gleichlaufdrehgelenk mit einem solchen Kugelkäfig.

Gleichlaufverschiebegelenke sind aus dem Stand der Technik hinlänglich bekannt und umfassen ein Gelenkaußenteil mit mehreren umfangsverteilten längsverlaufenden Außenbahnen, ein Gelenkinnenteil mit mehreren umfangsverteilten längsverlaufenden Innenbahnen, drehmomentübertragende Kugeln, die jeweils in einem Bahnpaar bestehend aus einer Außenbahn und einer Innenbahn geführt sind, sowie einen Kugelkäfig mit umfangsverteilten Fenstern zur Aufnahme der Kugeln. Bei Beugung des Gelenks werden die Kugeln im Zusammenwirken mit den Bahnen und dem Kugelkäfig auf die winkelhalbierende Ebene eingestellt.

Aus der DE 10 2005 059 696 A1 ist ein Kugelkäfig für ein Gleichlaufverschiebegelenk bekannt, das aus einem vorgeformten Rohteil hergestellt wird. Das vorgeformte Rohteil hat außen eine konische Fläche und eine sphärische Fläche. Die konische Fläche wird vor dem Härten spanend bearbeitet, die sphärische Fläche wird nach dem Härten spanend bearbeitet.

Der vorliegenden Erfindung liegt die Aufgabe zugrunde einen verbesserten Kugelkäfig für ein Gleichlaufverschiebegelenk vorzuschlagen, das unter günstigem Materialeinsatz einfach und kostengünstig herstellbar ist. Die Aufgabe besteht ferner darin, ein Verfahren zur Herstellung eines solchen verbesserten Kugelkäfigs vorzuschlagen. Des weiteren soll ein verbessertes Gleichlaufdrehgelenk mit einem solchen Kugelkäfig vorgeschlagen werden.

Die Lösung besteht in einem Kugelkäfig für ein Gleichlaufdrehgelenk umfassend mehrere umfangsverteilte Fenster zur Aufnahme drehmomentübertragender Kugeln, wobei die Fenster gemeinsam eine Fenstermittenebene E definieren; eine äußere sphärischen Steuerfläche um einen ersten Mittelpunkt M1 sowie eine äußere Freifläche; eine innere sphärische Steuerfläche um einen zweiten Mittelpunkt M2; wobei der erste Mittelpunkt M1 und der zweite Mittelpunkt M2 jeweils mit axialem Abstand zur Fenstermittenebene E liegen; eine erste Stirnfläche und eine zur ersten Stirnfläche entgegengesetzt gerichtete zweite Stirnfläche; wobei zumindest die äußere Freifläche, ausgehend von einem vorgeformten Rohteil, mechanisch unbearbeitet ist.

Der Vorteil besteht darin, daß allenfalls die sphärische Steuerfläche mechanisch bearbeitet werden muß, während die äußere Freifläche gänzlich unbearbeitet bleibt. Auf diese Weise wird ein Fertigungsschritt eingespart, was sich wiederum günstig auf die Fertigungszeit und auch auf die Herstellungskosten auswirkt. Es muß nur ein Abschnitt der Außenfläche des Kugelkäfigs mechanisch bearbeitet werden, so daß die Bearbeitungsfläche reduziert ist, was sich wiederum günstig auf den Werkzeugverschleiß auswirkt. Unter mechanischer Bearbeitung wird in diesen Zusammenhang sowohl eine spanende Bearbeitung, wie beispielsweise Drehen oder Schleifen, als auch eine spanlose Bearbeitung, wie beispielsweise Formrollen, verstanden. Dabei kann die mechanische Bearbeitung der sphärischen Steuerfläche vor dem Härten stattfinden, wobei dann insbesondere Drehen oder Formrollen in Frage kommen. Die mechanische Bearbeitung kann jedoch auch erst nach dem Härten erfolgen, wobei dann beispielsweise Schleifen oder Hartdrehen als Fertigungsschritt in Frage kommen. Die äußere Freifläche geht von einer Stirnfläche aus und endet vorzugsweise zwischen einem Bereich innerhalb des benachbarten Ringstegs und dem Bereich der Fenstermittenebene. Dabei kann das Ende der Freifläche, unter Berücksichtigung des maximalen Beugewinkels des Gelenks, in jedem Zwischenbereich zwischen diesen beiden Bereichen sein.

Der erfindungsgemäße Kugelkäfig eignet sich besonders für solche Gleichlaufdrehgelenke, bei denen am Kugelkäfig eine primäre Funktionsfläche mit Steuerungsfunktion und eine hiervon abgesetzte sekundäre Fläche ohne Arbeitsfunktion vorgesehen ist. Dies sind insbesondere Verschiebegelenke, beispielsweise Doppel-Offset-Verschiebegelenke mit parallelen Kugelbahnen oder VL-Verschiebegelenke mit gekreuzten Kugelbahnen. Der erfindungsgemäße Kugelkäfig kann jedoch grundsätzlich auch in Festgelenken zum Einsatz kommen, bei denen am Kugelkäfig eine Trennung zwischen einer Funktionsfläche und einer sekundären Fläche ohne Arbeitsfunktion vorgesehen ist. Auch hier ergeben sich die obengenannten Vorteile einer verkürzten Fertigungszeit und einer höheren Werkzeugstandzeit.

Die äußere Freifläche ist vorzugsweise konisch gestaltet, wobei andere Außenkonturen, wie eine im Längsschnitt konvexe Freifläche, nicht ausgeschlossen sind. Nach einer ersten Ausführungsform endet die äußere Freifläche axial innerhalb des ersten Ringsteges, der zwischen der zweiten Stirnfläche und den Fenstern gebildet ist. An die äußere Freifläche schließt sich vorzugsweise eine Konusfläche an, die wiederum tangential in die sphärische Steuerfläche übergeht. Die konische Freifläche ist gegenüber der Konusfläche nach radial innen zurückversetzt, wobei zwischen den beiden Flächen im Längsschnitt betrachtet eine Stufe als Übergang gebildet ist. Durch diese Ausgestaltung befinden sich die Fenster vollständig im Bereich der sphärischen Steuerfläche bzw. der Konusfläche. Dabei liegen auch die axialen Seitenwände der Fenster, welche benachbart zum zweiten Ende des Kugelkäfigs liegen, im Bereich der Konusfläche, der eine größere radiale Ausdehnung hat als die Freifläche. Dies hat den Vorteil, daß die Kugeln bei Beugung des Gelenks in radiale Richtung durch die Seitenflächen der Fenster seitlich besser geführt werden. Vorzugsweise erstreckt sich die konische Freifläche, ausgehend von der ersten Stirnfläche, bis kurz vor die Ebene, welche durch die Seitenwände der Fenster aufgespannt wird. Auf diese Weise ist die Freifläche besonders groß bzw. die Konusfläche besonders klein, so daß auch die gegebenenfalls zu bearbeitende Fläche besonders klein ist. Die Konusfläche geht tangential in die sphärische Steuerfläche über. Beide Flächen können somit gemeinsam mechanisch bearbeitet werden, wobei die äußere Freifläche Raum für den Werkzeugauslauf bietet. Vorzugsweise sind der Winkel, den die konische Freifläche und die Konusfläche mit der Längsachse einschließen, gleich groß. Mit anderen Worten, im Längsschnitt betrachtet verlaufen eine Tangente an die Konusfläche und eine Tangente an die konische Freifläche parallel zueinander.

Nach einer zweiten Ausführungsform erstreckt sich die äußere Freifläche bis über den ersten Ringsteg hinaus axial bis in den Bereich der Fenster, wo sie an die sphärische Steuerfläche anschließt. Dabei ist vorgesehen, daß die äußere Freifläche, welche ebenfalls vorzugsweise konisch gestaltet ist, gegenüber der sphärischen Steuerfläche nach innen abgesetzt ist. Dies bietet den Vorteil, daß ein Werkzeugauslauf für die Bearbeitung der sphärischen Steuerfläche gegeben ist. Ein besonders günstiges Verhältnis zwischen sphärischer Steuerfläche und äußerer Freifläche ist gegeben, wenn sich die äußere Freifläche axial bis zwischen den axialen Seitenwänden der Fenster und der Fenstermittenebene endet. So ist die konische Freifläche relativ groß bzw. die zu bearbeitende sphärische Steuerfläche relativ klein, was sich günstig auf die Fertigungszeit und die Werkzeugstandzeit und damit auf die Herstellungskosten auswirkt.

Nach einer weiteren Ausführungsform ist es prinzipiell auch denkbar, daß bei Kugelkäfigen, bei denen geringere Anforderungen an die Fertigungstoleranzen gestellt werden oder bei vorgeformten Rohteilen mit besonders hoher Maßgenauidkeit, auf die mechanische Bearbeitung der Außenfläche gänzlich verzichtet wird. Das heißt, die Außenfläche des Kugelkäfigs wird ausgehend vom vorgeformten Rohteil überhaupt nicht bearbeitet, was sich besonders günstig auf die Fertigungszeit und Herstellungskosten auswirkt. Das Rohteil bzw. der fertig hergestellte Kugelkäfig kann in diesem Fall eine äußere, vorzugsweise konische Freifläche aufweisen, die an die sphärische Steuerfläche stufenlos, das heißt tangential, anschließt oder welche gegenüber der sphärischen Steuerfläche radial nach innen zurückversetzt ist.

Nach einer günstigen Weiterbildung hat der Kugelkäfig im Anschluß an die innere sphärische Steuerfläche eine hinterschnittfreie Erweiterungsfläche, die sich in Richtung zur Öffnung hin vergrößert. Dabei stellt die Erweiterungsfläche eine sekundäre Fläche dar, die in eingebautem Zustand keine Funktion wahrnimmt und daher vorzugsweise unbearbeitet bleibt. Ausgehend von der Öffnung des Kugelkäfigs hat die Erweiterungsfläche vorzugsweise einen innenzylindrischen Abschnitt, der bogenförmig in einen nach innen vorstehenden Übergangsabschnitt übergeht, an den sich die innere sphärische Steuerfläche anschließt.

Die Lösung der obengenannten Aufgabe besteht weiter in einem Verfahren zur Herstellung eines Kugelkäfigs für ein Gleichlaufdrehgelenk, insbesondere für ein Gleichlaufverschiebegelenk, mit folgenden Verfahrensschritten:
Bereitstellen eines vorgeformten ringförmigen Rohteils mit einer Außenfläche, einer Innenfläche, einer ersten Endfläche und einer zweiten Endfläche, wobei die Außenfläche eine sphärische Fläche und eine äußere Freifläche umfaßt; mechanische Bearbeitung der sphärischen Fläche zur Erzeugung einer sphärischen Steuerfläche, wobei zumindest die äußere Freifläche mechanisch unbearbeitet bleibt.

Der erfindungsgemäß hergestellte Kugelkäfig bietet die bereits obengenannten Vorteile einer schnellen und kostengünstigen Fertigung, wobei die Fertigungszeiten dadurch, daß zumindest die konische Freifläche unbearbeitet bleibt, reduziert sind. Es ist vorgesehen, daß nur die Funktionsflächen bearbeitet werden, während die sekundären Flächen unbearbeitet bleiben. Als mechanische Bearbeitung der sphärischen Fläche kommen spanende und spanlose Fertigungsverfahren in Frage. Beispielsweise könnte die sphärische Fläche bis nach dem Härten, ausgehend vom vorgeformten Rohteil, unbearbeitet bleiben und dann geschliffen und anschließend hartbearbeitet werden. Unter Hartbearbeiten werden in diesem Zusammenhang mechanische Bearbeitungsverfahren verstanden, die nach dem Härten vorgenommen werden. Es ist jedoch auch möglich, daß die sphärische Fläche vor dem Härten mittels Drehen oder Formrollen bearbeitet werden; dann findet nach dem Härten vorzugsweise keine weitere Bearbeitung der sphärischen Steuerfläche statt. Die äußere Freifläche ist, wie oben bereits gesagt, vorzugsweise konisch gestaltet.

Nach einer ersten Ausführungsform weist das vorgeformte ringförmige Rohteil eine konische Fläche auf, die zwischen der äußeren Freifläche und der sphärischen Fläche angeordnet ist und die tangential an die sphärische Fläche anschließt. Die konische Fläche wird gemeinsam mit der sphärischen Fläche mechanisch bearbeitet, während die an die konische Fläche axial anschließende äußere Freifläche mechanisch unbearbeitet bleibt. Bei der mechanischen Bearbeitung wird aus der konischen Fläche des Rohteils die Konusfläche erzeugt, und aus der sphärischen Fläche des Rohteils wird die sphärische Steuerfläche des Kugelkäfigs erzeugt.

Nach einer zweiten Ausführungsform erstreckt sich die äußere Freifläche axial weiter bis in den Bereich der Fenster und schließt direkt an die sphärische Steuerfläche an. Bei dieser Ausführungsform wird nur die sphärische Steuerfläche mechanisch bearbeitet, während die äußere Freifläche unbearbeitet bleibt. Dadurch, daß die äußere Freifläche größer und die sphärische Steuerfläche kleiner ist wird die Fertigungszeit für die mechanische Bearbeitung nochmals reduziert und die Werkzeugstandzeiten erhöht. Die äußere Freifläche ist vorzugsweise gegenüber der sphärischen Steuerfläche nach innen zurückversetzt, so daß zwischen beiden eine Stufe gebildet ist.

Vorzugsweise weist die Innenfläche des Rohteils eine innere Freiformfläche und eine an diese anschließende Erweiterungsfläche auf, wobei als weiterer Verfahrensschritt vorgesehen ist: Mechanische Bearbeitung der inneren Freiformfläche, wobei eine sphärische innere Steuerfläche erzeugt wird.

Für eine schnelle und effektive Herstellung ist es günstig, wenn die Erweiterungsfläche, ausgehend vom vorgeformten Rohteil, mechanisch unbearbeitet bleibt. Vorzugsweise bleibt auch die erste Stirnfläche und/oder die zweite Stirnfläche, ausgehend vom vorgeformten Rohteil, mechanisch unbearbeitet. Ebenso ist es für eine reduzierte Fertigungszeit günstig, wenn zumindest einer der Abschnitte der inneren Freiformfläche, die axial benachbart zur inneren sphärischen Steuerfläche liegen, ausgehend vom vorgeformten Rohteil, mechanisch unbearbeitet bleibt. Die innere Freiformfläche des Rohteils kann, in Abhängigkeit vom Fertigungsprozeß des Präzisionsrohlings, prinzipiell eine beliebige Kontur aufweisen. Für eine gute Entformbarkeit des Umformwerkzeugs ist es günstig, wenn die innere Freiformfläche zumindest in Teilbereichen eine leichte Schmiedeschräge aufweist.

Nach einer bevorzugten Ausgestaltung hat die innere Freiformfläche des Rohteils umfangsverteilte längsverlaufende Keilnuten, die in die Erweiterungsfläche münden. Dabei sind die Keilnuten in Umfangsrichtung dort angeordnet, wo in fertig bearbeitetem Zustand des Kugelkäfigs die Fenster vorgesehen sind. Die zu den Fenstern ausgerichteten Keilnuten und die Erweiterungsfläche ermöglichen die axiale Montage des Gelenkinnenteils. Weiterhin wird im Bereich der Fenster Material eingespart, das für die Erzeugung der Fenster ohnehin entfernt werden müßte. In Umfangsrichtung zwischen zwei benachbarten Keilnuten sind jeweils Längsstege gebildet, welche in fertig montiertem Zustand eine Anschlagfläche für das Gelenkinnenteil bilden.

Die Lösung der obengenannten Aufgabe besteht weiter in einem Gleichlaufdrehgelenk, insbesondere in einem Gleichlaufverschiebegelenk, umfassend ein Gelenkaußenteil mit einer inneren Führungsfläche, in der äußere Kugelbahnen ausgebildet sind; ein Gelenkinnenteil mit einer äußeren konvexen Führungsfläche, in der längsverlaufende innere Kugelbahnen ausgebildet sind; drehmomentübertragende Kugeln, die in aus jeweils einer äußeren Kugelbahn und einer inneren Kugelbahn gebildeten Kugelbahnen laufen; und einen Kugelkäfig nach einer der obengenannten Ausführungsformen, der zwischen dem Gelenkaußenteil und dem Gelenkinnenteil angeordnet ist, wobei die drehmomentübertragenden Kugeln in den Fenstern des Kugelkäfigs aufgenommen sind.

Vorzugsweise ist das Gleichlaufdrehgelenk als Gleichlaufverschiebegelenk gestaltet und hat eine innenzylindrische Führungsfläche am Gelenkaußenteil und eine sphärische Führungsfläche am Gelenkinnenteil. Der Kugelkäfig kann nach einer der obengenannten Ausführungen gestaltet sein, woraus sich die obengenannten Vorteile ergeben. Durch eine asymmetrische Anordnung der Fenstermittenebene kann - bei gleichbleibendem Verschiebeweg - die axiale Länge des Gelenkaußenteils reduziert werden, was auch beim Gelenkaußenteil zu einer Gewichteinsparung und reduzierten Fertigungszeiten führt.

Bevorzugte Ausführungsbeispiele werden nachstehend anhand der Zeichnungsfiguren erläutert. Es zeigt:
- Figur 1: einen erfindungsgemäßen Kugelkäfig für ein Doppel-OffsetVerschiebegelenk
a) im Längsschnitt durch zwei einander gegenüberliegende Stege;
b) im Querschnitt;
c) im Längsschnitt durch zwei einander gegenüberliegende Fenster;
d) das Detail D aus Figur 1c);
- Figur 2: ein vorgeformtes Rohteil für einen erfindungsgemäßen Kugelkäfig nach Figur 1
a) im Längsschnitt gemäß Schnittlinie A-A aus Figur 2b);
b) im Querschnitt gemäß Schnittlinie B-B gemäß Figur 2a);
c) im Längsschnitt gemäß Schnittlinie C-C aus Figur 2b);
d) das Detail D aus Figur 2a);
- Figur 3: ein vorgeformtes Rohteil in einer alternativen Ausführungsform für einen erfindungsgemäßen Kugelkäfig nach Figur 1
a) im Längsschnitt gemäß Schnittlinie A-A aus Figur 3b);
b) im Querschnitt gemäß Schnittlinie B-B gemäß Figur 3a);
c) im Längsschnitt gemäß Schnittlinie C-C aus Figur 3b);
d) das Detail D aus Figur 3a);
- Figur 4: den erfindungsgemäßen Kugelkäfig bei der Herstellung ausgehend von dem Rohteil aus Figur 2 oder Figur 3
a) nach einer inneren Drehbearbeitung;
b) das drehbearbeitete Bauteil nach der Herstellung der Fenster im Längsschnitt durch die Stege;
c) das drehbearbeitete Bauteil nach der Herstellung der Fenster im Querschnitt gemäß Schnittlinie C-C aus Figur 2b);
d) nach einer äußeren und inneren Hartbearbeitung;

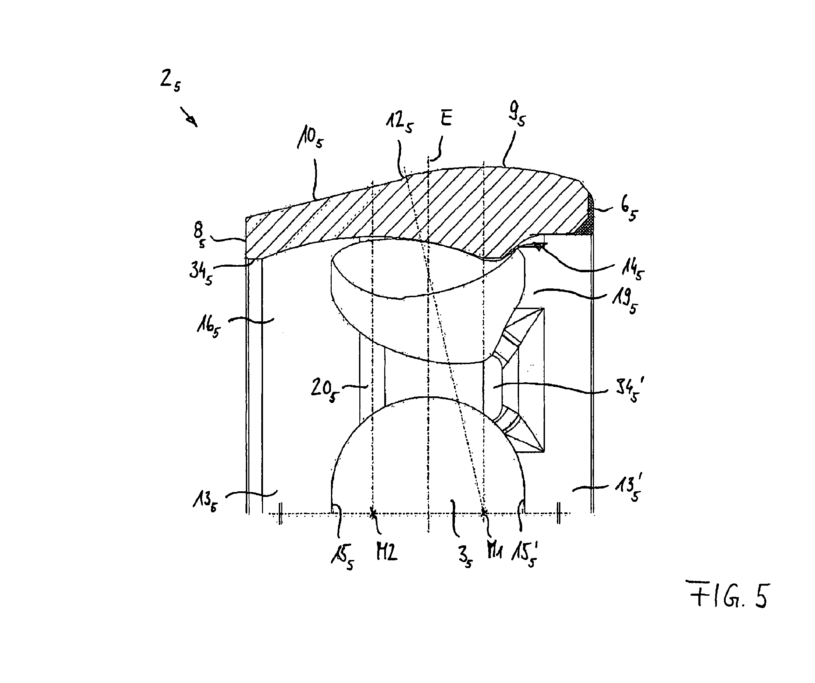

- Figur 5: einen erfindungsgemäßen Kugelkäfig für ein Doppel-OffsetVerschiebegelenk in einer zweiten Ausführungsform im Halblängsschnitt;

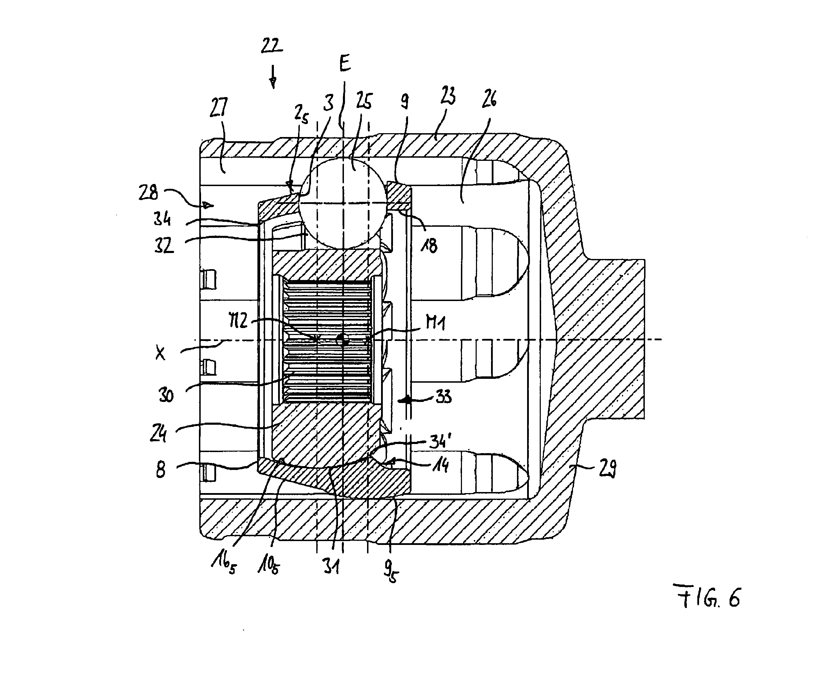

- Figur 6: ein erfindungsgemäßes Doppel-Offset-Gleichlaufverschiebegelenk mit einem erfindungsgemäßen Kugelkäfig gemäß Figur 5.

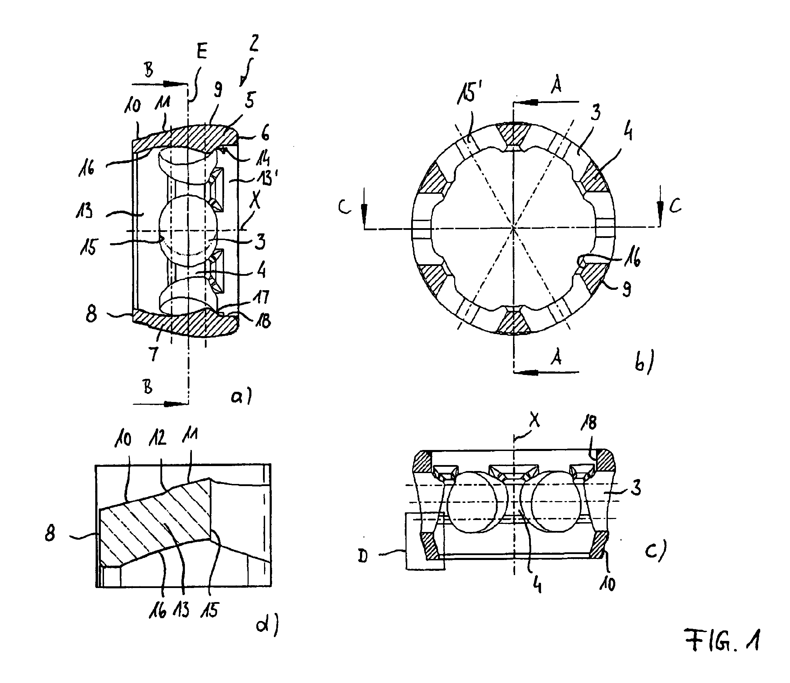

Figur 1 zeigt einen Kugelkäfig 2 für ein weiter unten näher beschriebenes Gleichlaufdrehgelenk in Form eines Gleichlaufverschlebegelenks. Das Gleichlaufverschiebegelenk umfaßt ein Gelenkaußenteil mit einer innenzylindrischen Führungsfläche, ein Gelenkinnenteil mit einer äußeren sphärischen Führungsfläche und den Kugelkäfig zur Aufnahme von drehmomentübertragenden Kugeln.

Der Kugelkäfig 2 ist ringförmig um eine Drehachse X gestaltet und umfaßt mehrere umfangsverteilte Fenster 3 zur Aufnahme der drehmomentübertragenden Kugeln sowie in Umfangsrichtung zwischen zwei benachbarten Fenstern 3 gebildete Stege 4. Die Zahl der Fenster 3 richtet sich nach der Zahl der zu verwendenden drehmomentübertragende Kugeln und beträgt üblicherweise sechs oder acht. Die Fenster 3 definieren gemeinsam eine Fenstermittenebene E, in der die Kugeln gehalten werden. Diese Ebene stellt die winkelhalbierende Ebene zwischen dem Gelenkinnenteil und dem Gelenkaußenteil bei Abwinklungen des Gelenks dar. Es ist ersichtlich, daß ein erster Käfigabschnitt 5, der sich zwischen der Fenstermittenebene E und einer ersten Stirnfläche 6 erstreckt, axial kürzer ist als ein zweiter Käfigabschnitt 7, der sich zwischen der Fenstermittenebene E und einer zur ersten Stirnfläche 6 entgegengesetzt gerichteten zweiten Stirnfläche 8 erstreckt. Diese Ausgestaltung des Kugelkäfigs 2 führt bei gleichbleibender Schiebeweganforderung des Doppel-Offset-Gelenks zu einer Reduzierung der axialen Baulänge des Gelenkaußenteils, was wiederum Gewicht einspart.

Der Kugelkäfig 2 umfaßt weiterhin eine äußere sphärische Steuerfläche 9, die unmittelbar mit der innenzylindrischen Führungsfläche des Gelenkaußenteils in Kontakt tritt und sich über den ersten Käfigabschnitt 5 und einen Teil des zweiten Käfigabschnitts 7 erstreckt. Die sphärische Steuerfläche 9 ist eine Kugelabschnittsfläche oder eine ähnliche Tonnenfläche. An die sphärische Steuerfläche 9 ist eine Konusfläche 11 tangential angeschlossen. Der Konuswinkel der Konusfläche 11 entspricht etwa dem halben maximalen Beugewinkel des Gleichlaufverschiebegelenks. Dabei schließt die Konusfläche 11 unmittelbar tangential an die sphärische Steuerfläche 9 an. Die Konusfläche 11 erstreckt sich in Richtung zur zweiten Stirnfläche 8 geringfügig über eine Ebene hinaus, die durch die seitlichen Führungsflächen 15 der Fenster 3, die dem zweiten Käfigabschnitt 7 zugeordnet sind, definiert ist. Dadurch, daß sich die Konusfläche 11 bis in den Bereich der axialen Enden der Fenster 3 erstreckt, wird die seitliche Führungsfläche 15 radial erweitert, so daß die Kugeln bei abgewinkeltem Gelenk radial besonders gut abgestützt sind.

An die Konusfläche 11 schließt sich eine äußere Freifläche 10 an, welche vorzugsweise konisch ausgebildet und gegenüber der Konusfläche 11 nach radial innen zurückversetzt ist. Der Konuswinkel der konischen Freifläche 10 entspricht dabei dem Winkel der Konusfläche 11, das heißt eine Tangente an die Konusfläche 11 ist parallel zu einer Tangente an die konische Freifläche 10. Zwischen der Konusfläche 11 und der konischen Freifläche 10 ist eine umlaufende Stufe 12 als Übergang gebildet, die insbesondere in Figur 1d ersichtlich ist. Die Stufe 12 ist axial benachbart zu einer Ebene angeordnet, welche durch die axialen Seitenflächen 15 der Fenster 3 aufgespannt wird. Damit liegt die Stufe 12 axial im Bereich des Ringstegs 13, der zwischen der Stirnfläche 8 und den Fenstern 3 gebildet ist.

Durch diese Ausgestaltung liegen die Seitenflächen 15, die der zweiten Stirnfläche 8 zugeordnet sind, noch innerhalb des Bereichs der Konusfläche 11. Dies hat den Vorteil, daß die Kugeln in den Fenstern, aufgrund der gegenüber der Freifläche radial vorstehenden Konusfläche, bei großen Beugewinkeln des Gelenks noch gut geführt werden. Insgesamt hat der erfindungsgemäße Kugelkäfig 2 mit konischer Freifläche 10 den Vorteil, daß die Freifläche 10 nicht mechanisch bearbeitet werden muß. Auf diese Weise wird die Bearbeitungszeit verringert und die Werkzeugstandzeit erhöht. Außerdem dient die Freifläche 10 bei der Fertigung als Auslauf für Bearbeitungswerkzeuge, beispielsweise eine Schleifscheibe oder einen Drehmeißel. Dadurch, daß die Konusfläche 11 , ausgehend von der sphärischen Steuerfläche 9, kurz hinter der Fensterebene endet, ist die Freifläche 10 besonders groß.

Auf seiner Innenseite hat der Kugelkäfig 2 eine konkave innere sphärische Steuerfläche 16 zur Führung des Kugelkäfigs 2 gegenüber einer Führungsfläche des Gelenkinnenteils. Die innere sphärische Steuerfläche 16 erstreckt sich über den zweiten Käfigabschnitt 7 und einen Teil des ersten Käfigabschnitts 5. An die innere sphärische Steuerfläche 16 schließt sich - axial etwa im Bereich des größten Durchmessers der äußeren sphärischen Steuerfläche 9 - eine Erweiterungsfläche 14 an, die den Käfigring in Richtung zur Öffnung erweitert und einen konkaven Übergangsbereich 17 sowie eine innere Zylinderfläche 18 aufweist.

Die äußere Steuerfläche 9 hat einen größten Außendurchmesser, der mit gleichem axialen Abstand zur Fenstermittenebene E in entgegengesetzte Richtung zu einem größten Innendurchmesser der inneren Steuerfläche 16 liegt. Dieser Versatz ("Offset") der maximalen Durchmesser der Steuerflächen gibt dem Gelenk seinen Namen, nämlich Doppel-Offset-Gelenk.

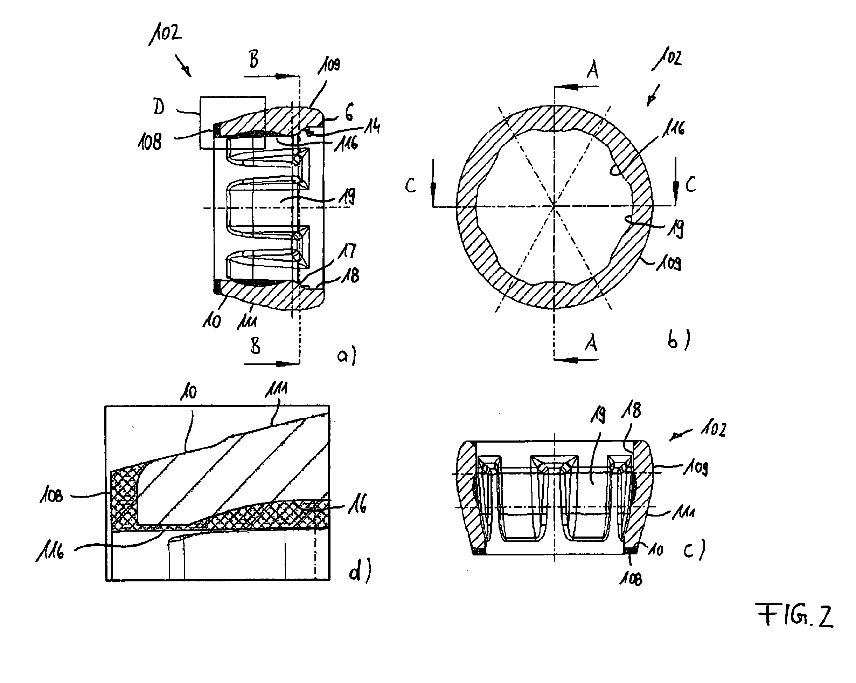

Im folgenden wird ein vorgeformtes Rohteil zur Herstellung des erfindungsgemäßen Kugelkäfigs 2 anhand der Figur 2 erläutert. Dabei sind gleiche Einzelheiten mit gleichen Bezugsziffern wie in Figur 1 bezeichnet und vorläufige Einzelheiten mit um 100 erhöhten Bezugsziffern versehen.

Es ist ersichtlich, daß der Rohling 102 bereits größtenteils die Konturen des fertigbearbeiteten Kugelkäfigs 2 aufweist. Der Rohling 102 ist als Präzisionsrohling gestaltet, das heißt der Rohling ist durch ein Massivumformverfahren, beispielsweise Schmieden, mit hoher Präzision vorgeformt. Als Massivumformverfahren kommen beispielweise Kaltumformen oder Halbwarmumformen in Frage. Das Kaltumformen, bei dem die Arbeitstemperatur unterhalb der Rekristallisationstemperatur liegt, ermöglicht sehr hohe Maß- und Formgenauigkeiten und Oberflächenqualitäten. Des weiteren bietet das Kaltumformen den Vorteil einer hohen Festigkeit des erzeugten Rohlings. Beim Halbwarmumformen (warm forming) ist das Umformvermögen größer als beim Kaltumformen, allerdings ist die Maßgenauigkeit etwas schlechter.

Der Rohling 102 ist ringförmig und hat eine erste axiale Endfläche 6, eine hierzu entgegengesetzt gerichtete zweite axiale Endfläche 108, eine Außenfläche und eine Innenfläche. Die Außenfläche umfaßt ausgehend von der ersten Endfläche eine sphärische Fläche 109, eine sich daran tangential anschließende kegelige Fläche 111 sowie eine sich daran anschließende vorzugsweise konische Freifläche 10.

Die Innenfläche umfaßt ausgehend von der ersten Endfläche 6 eine zylindrische Fläche 18 mit einem größeren Innendurchmesser, einen sich hieran anschließenden konischen Übergangsabschnitt 17 sowie eine sich hieran anschließende innere Freiformfläche 116 mit einem kleineren Innendurchmesser. Dabei sind axial im Bereich der inneren Freiformfläche 116 längsverlaufende Keilnuten 19 eingeformt, die in die zylindrische Fläche 18 münden. Die Längskontur der Freiformfläche hängt vom Schmiede- bzw. Umformverfahren ab. Vorzugsweise ist die innere Freiformfläche im wesentlichen zylindrisch. Die Keilnuten 19 sind in Umfangsrichtung dort angeordnet, wo sich in fertig bearbeiteten Zustand die Fenster befinden werden. Auf diese Weise wird im Bereich der Fenster Material eingespart, das für die Erzeugung der Fenster ohnehin spanend entfernt werden müßte. Die mit den Fenstern fluchtenden Keilnuten 19 und die Erweiterungsfläche 14 ermöglichen später die axiale Montage des Gelenkinnenteils.

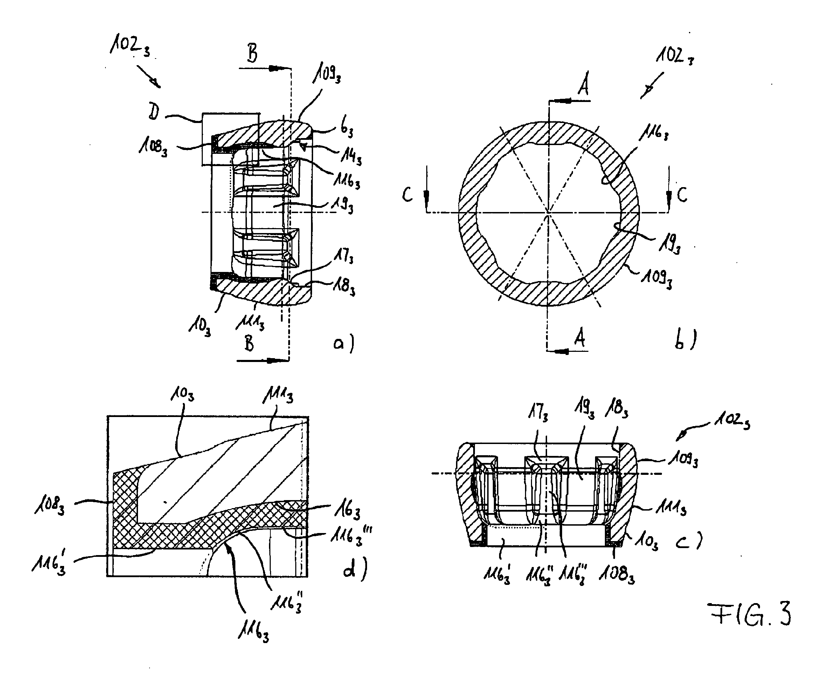

Figur 3 zeigt ein vorgeformtes Rohteil in einer zweiten Ausführungsform, das zur Herstellung des erfindungsgemäßen Kugelkäfigs 2 dienen kann. Das Rohteil gemäß Figur 3 entspricht weitestgehend demjenigen aus Figur 2, so daß hinsichtlich der Gemeinsamkeiten auf die obige Beschreibung Bezug genommen wird. Gleiche bzw. einander entsprechende Bauteile sind mit gleichen Bezugsziffern wie in Figur 2 mit um drei tiefergestellten Indizes bezeichnet. Im folgenden wird hauptsächlich auf die Unterschiede eingegangen.

Die vorliegende Ausführungsform des vorgeformten Rohteils ist **dadurch gekennzeichnet, daß** die innere Freiformfläche 116₃ mehrere Teilabschnitte aufweist. Es ist insbesondere in Figur 3d ersichtlich, daß die Freiformfläche 116₃ im Längsschnitt durch einen Stegbereich betrachtet, ausgehend von der Stirnseite 108₃ zunächst einen zylindrischen Endabschnitt 116₃' aufweist, an den sich weiter innen ein Übergangsabschnitt 116₃" anschließt, welcher wiederum in einen Mittelabschnitt 116₃''' übergeht. Der Übergangsabschnitt 116₃" ist im Längsschnitt betrachtet vorzugsweise konkav gestaltet. Der Mittelabschnitt 116₃''' erstreckt sich axial etwa bis zu dem Bereich, der später benachbart zur inneren sphärischen Steuerfläche 16₃ liegt. An den Mittelabschnitt 116₃''' schließt sich die Erweiterungsfläche 14₃ aus Übergangsfläche 17₃ und Zylinderfläche 18₃ an. In Umfangsabschnitten, die zwischen den Stegbereichen liegen, sind in der Freiformfläche 116₃ die Keilnuten 19₃ gebildet. Hier werden zu einem späteren Zeitpunkt die Fenster eingearbeitet. Während das Rohteil gemäß Figur 2 vorzugsweise mittels Kaltumformen hergestellt ist, ist das vorliegende Rohteil vorzugsweise mittels Halbwarmumformen hergestellt.

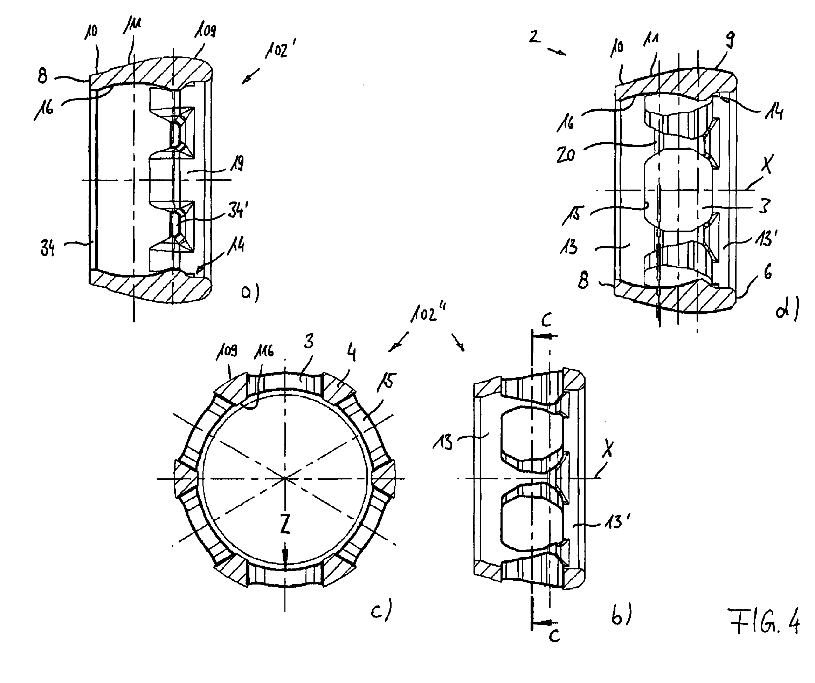

Im folgenden werden, ausgehend vom Rohling gemäß Figur 2 oder Figur 3, die einzelnen Verfahrensschritte zur Herstellung des erfindungsgemäßen Kugelkäfigs 2 anhand der Figur 4 erläutert. Dabei sind gleiche Einzelheiten mit gleichen Bezugsziffern wie in den Figuren 1 bis 3 bezeichnet.

Der Rohling 102 wird an seinem der ersten Endfläche 6 zugeordneten Ende eingespannt und in einem folgenden Fertigungsschritt drehend bearbeitet. Bei der Drehbearbeitung werden nur die Endfläche 108, die nach der Drehoperation die Stirnfläche 8 bildet, und die innere Freiformfläche 116 gedreht, die nach der Drehoperation die innere sphärische Steuerfläche 16 bildet. Die übrigen Flächen, nämlich die sphärische Außenfläche 109, die kegelige Fläche 111, die Endfläche 6 und die Erweiterungsfläche 14 bestehend aus Zylinderfläche 18 und Übergangsfläche 17 bleiben (zunächst) unbearbeitet.

Figur 4a zeigt das Werkstück 102' nach der Drehbearbeitung, wobei die innere sphärische Fläche 16 mit den axial angrenzenden nicht näher bezeichneten Zylinderflächen sowie die zweite Stirnfläche 8 bearbeitet sind.

Im Anschluß an die Drehbearbeitung wird der Kugelkäfig einer Fräsbearbeitung unterzogen, um die Fenster herzustellen. Die Figuren 4b) und 4c) zeigen den Kugelkäfig 102" nach der Fräsbearbeitung, wobei die über den Umfang verteilten Fenster 3 sichtbar sind. Nach dem Fräsen wird der Kugelkäfig 2 gehärtet.

Nach dem Härten wird die bisher unbearbeitete äußere sphärische Fläche 109 mit der daran anschließenden kegeligen Fläche 111 bearbeitet, wobei entweder Drehen oder Schleifen als Fertigungsverfahren in Frage kommen. Auch die innere sphärische Fläche 116 wird nach dem Härten feinbearbeitet, wobei hieraus die sphärische Steuerfläche 16 hervorgeht. Die feinbearbeiteten Außen- und Innenflächen sind in Figur 4d, welche den fertigen Kugelkäfig 2 zeigt, mit verdickter Linie gekennzeichnet. Bei der Hartbearbeitung wird das beim Rohling vorgesehene Aufmaßmaterial der sphärischen Fläche 109 und der kegeligen Fläche 111 spanend abgetragen. Dabei liegt das Aufmaß bei wenigen Zehntel Millimetern. Durch die Feinbearbeitung wird die äußere sphärische Steuerfläche 9 und die daran unmittelbar tangential anschließende Konusfläche 11 erzeugt. Die konische Freifläche 10 bleibt, ausgehend vom Rohling, bis zuletzt unbearbeitet. Dies hat den Vorteil, daß die Bearbeitungsfläche und damit die Fertigungszeit reduziert sind, sowie die Werkzeugstandzeiten erhöht.

Innen wird durch Feinbearbeitung der Freiformfläche 116 die innere sphärische Steuerfläche 16 erzeugt. Demgegenüber bleiben die erste Endfläche 6 und die Erweiterungsfläche 14 bis zuletzt unbearbeitet, so daß hier Fertigungsschritte eingespart werden. Der fertig bearbeitete Kugelkäfig 2 ist auch in Figur 1 gezeigt, auf deren Beschreibung insofern verwiesen wird. Es ist ersichtlich, daß die sphärische Innenfläche 16 im Bereich ihres größten Innendurchmessers durch eine zylindrische Fläche 20 unterbrochen ist. Diese Zylinderfläche 20 ermöglicht im Betriebszustand des Gelenks eine axiale Verschiebbarkeit des Gelenkinnenteils gegenüber dem Kugelkäfig 2, so daß im Antriebsstrang auftretende Schwingungen abgekoppelt werden können.

Es versteht sich, daß der hier beschriebene Fertigungsprozeß eine bevorzugte Vorgehensweise darstellt. Es sind jedoch prinzipiell auch Abwandlungen denkbar. Beispielsweise könnte die äußere sphärische Fläche 109 mit der tangential anschließenden kegeligen Fläche 111, ausgehend vom Präzisionrohling, auch gänzlich unbearbeitet bleiben, wenn die Toleranzen des Präzisionsrohlings hinreichend genau sind. Außerdem ist es auch vorstellbar, daß die zweite Endfläche 8, ausgehend vom vorgeformten Präzisionsrohling, unbearbeitet bleibt.

Figur 5 zeigt einen erfindungsgemäßen Kugelkäfig 2₅ in einer zweiten Ausführungsform. Dieser entspricht weitestgehend dem in Figur 1 bzw. Figur 4 gezeigten Kugelkäfig, so daß hinsichtlich der Gemeinsamkeiten auf die obige Beschreibung Bezug genommen wird. Dabei sind in Figur 5 gleiche bzw. einander entsprechende Einzelheiten mit um die Ziffer 5 tiefergestellten Indizes versehen. Im folgenden wird nur auf die Unterschiede eingegangen.

In Abwandlung zum Ausführungsbeispiel gemäß Figur 1 ist vorliegend keine Konusfläche vorgesehen. Dafür ist die äußere Freifläche 10₅ deutlich länger und erstreckt sich axial bis in den Bereich der Fenster 3₅. An die konische Freifläche 10₅ schließt sich die äußere sphärische Steuerfläche 9₅ unmittelbar an, wobei zwischen beiden Flächen eine umlaufende Stufe 12₅ gebildet ist. Der Übergang zwischen der äußeren Freifläche 10₅ und der sphärischen Steuerfläche 9₅ liegt vorliegend etwa zwischen der Fenstermittenebene E und einer Ebene, welche auf der Drehachse X senkrecht steht und den zweiten Mittelpunkt M2 beinhaltet. Generell ist die axiale Position der Stufe 12₅ abhängig vom maximalen Beugewinkel des Gelenks. Dies bedeutet auf den Kugelkäfig 2₅ bezogen, daß die Umschließung der sphärischen Steuerfläche 9₅ in Richtung zur Stufe 12₅ mindestens der Hälfte des Beugewinkels des Gelenks entspricht.

Die vorliegende Ausführungsform hat den Vorteil, daß die zu bearbeitende äußere Fläche 9₅ nochmals reduziert ist, was zu einer weiteren Verkürzung der Fertigungszeit und einer Erhöhung der Werkzeugstandzeit führt. Das Fertigungsverfahren entspricht ansonsten dem im Zusammenhang mit Figur 4 beschriebenen, so daß insofern auf die obige Beschreibung verwiesen wird. Auch hier ist es in Abwandlung zu den oben beschriebenen Fertigungsschritten denkbar, daß die äußere sphärische Fläche 109, ausgehend vom Präzisionsrohling, gänzlich unbearbeitet bleibt, wenn die Toleranzen des Präzisionsrohlings hinreichend genau sind.

Figur 6 zeigt beispielhaft ein erfindungsgemäßes Gleichlaufverschiebegelenk 22 mit einem Gelenkaußenteil 23, einem Gelenkinnenteil 24, einem erfindungsgemäßem Kugelkäfig 2₅ in der Ausführungsform nach Figur 5 und drehmomentübertragende Kugeln 25, die jeweils in einem zugehörigen Fenster 3 des Kugelkäfigs 2₅ in einer gemeinsamen Ebene E gehalten werden. Das Gelenkaußenteil 23 hat eine innenzylindrische Führungsfläche 26, mit der die sphärische Steuerfläche 9₅ des Kugelkäfigs 2₅ in Kontakt tritt und in dieser geführt wird. Weiterhin hat das Gelenkaußenteil 23 mehrere über den Umfang verteilte längsverlaufende Außenbahnen 27, die sich über einen wesentlichen Teil des Gelenkaußenteils 23 bis zum offenen Ende 28 erstrecken.

An dem zum offenen Ende 28 entgegengesetzten Ende ist das Gelenkaußenteil 23 glockenartig geschlossen und hat einen Boden 29 mit einem angeformten Zapfen, der zur Drehmomentabnahme dient. Das Gelenkinnenteil 24 hat eine Bohrung mit einer Längsverzahnung 30, in die ein hier nicht dargestellter Wellenzapfen mit einer entsprechenden Gegenverzahnung zur Drehmomentübertragung eingesteckt werden kann. Weiterhin hat das Gelenkinnenteil 24 eine kugelige Außenfläche 31, die mit der sphärischen Innenfläche 16₅ des Kugelkäfigs 2₅ in Kontakt tritt, mit über den Umfang verteilten längsverlaufenden Innenbahnen 32. In jeweils aus einer Innenbahn 32 und einer Außenbahn 27 gebildeten Bahnpaaren ist jeweils eine der drehmomentübertragenden Kugeln 25 geführt. Die Zylinderfläche 18 des Kugelkäfigs 2₅ bildet eine zum Boden 29 des Gelenkaußenteils 23 gerichtete größere Innenöffnung 33, deren Durchmesser zu Montagezwecken größer ist als der Außendurchmesser des Gelenkinnenteils 24. Auf der entgegengesetzten Seite hat der Kugelkäfig 2₅ eine kleinere Innenöffnung 34, deren Durchmesser kleiner ist als der größte Außendurchmesser des Gelenkinnenteils 24 und somit einen axialen Anschlag bildet.

Im folgenden wird die Montage des Gelenkinnenteils 24 in den Kugelkäfig 2₅ für ein Gelenk mit sechs drehmomentübertragenden Kugeln 25 beschrieben: Das Gelenkinnenteil 24 wird von dem der Zylinderfläche 18 zugeordneten Ende des Kugelkäfigs 2₅ in diesen bei etwa koaxialer Ausrichtung eingeführt. Dabei befinden sich die Stege des Gelenkinnenteils 24 in den Umfangsbereichen der Nuten 19 des Kugelkäfigs. Anschließend wird das Gelenkinnenteil 24 um etwa 30° um seine Achse X gedreht, so daß das Gelenkinnenteil 24 mit seinen Stegen in die Bereiche der Stege 4 des Kugelkäfigs gedreht wird. In dieser Position liegen die Stege des Gelenkinnenteils 24 im Bereich der Stege 4 des Kugelkäfigs 2₅, und zwar innerhalb der sphärischen Steuerfläche 16 des Kugelkäfigs 2₅. Auf diese Weise ist das Gelenkinnenteil 24 in beide axiale Richtungen gegenüber dem Kugelkäfig 2₅ fixiert, und zwar in Richtung zur ersten Stirnseite 6 durch eine Stützfläche an den zwischen den Fenstern liegenden Stegen und in Richtung zur zweiten Stirnseite 8 durch eine umlaufende Stützfläche. Die beiden an die sphärische Steuerfläche 16 axial anschließenden Bereiche der Innenöffnungen 34, 34' sind bei der Erzeugung der Steuerfläche 16 vorliegend mechanisch mit bearbeitet. Die Innenöffnungen 34, 34' können jedoch auch, ausgehend vom vorgeformten Rohteil, unbearbeitet bleiben.

Das gezeigte Gelenk hat einen Kugelkäfig nach Figur 5, wobei selbstverständlich auch ein Kugelkäfig nach Figur 1 eingesetzt werden könnte. Der erfindungsgemäße Kugelkäfig 2, 2₅ erlaubt eine verbesserte Fertigung insofern, als die Bearbeitungsfläche verringert ist, was sich günstig auf die Fertigungszeit und den Werkzeugverschleiß auswirkt.

Bezugszeichenliste
- 2: Kugelkäfig
- 3: Fenster
- 4: Steg
- 5: erster Käfigabschnitt
- 6: erste Stirnfläche
- 7: zweiter Käfigabschnitt
- 8: zweite Stirnfläche
- 9: äußere Steuerfläche
- 10: Freifläche
- 11: Konusfläche
- 12: Stufe
- 13: Ringsteg
- 14: Erweiterungsfläche
- 15: Führungsfläche
- 16: innere Steuerfläche
- 17: Übergangsbereich
- 18: Zylinderfläche
- 19: Keilnut
- 20: zylindrische Fläche
- 22: Gleichlaufverschiebegelenk
- 23: Gelenkaußenteil
- 24: Gelenkinnenteil
- 25: Kugel
- 26: Führungsfläche
- 27: Außenbahn
- 28: Ende
- 29: Boden
- 30: Längsverzahnung
- 31: Außenfläche
- 32: Innenbahn
- 33: Innenöffnung
- 34: Innenöffnung
- E: Fenstermittenebene
- M: Mittelpunkt
- X: Drehachse

## Patentansprüche

1. Kugelkäfig für ein Gleichlaufdrehgelenk umfassend
mehrere umfangsverteilte Fenster (3) zur Aufnahme drehmomentübertragender Kugeln (25), wobei die Fenster (3) gemeinsam eine Fenstermittenebene (E) definieren;
eine äußere sphärischen Steuerfläche (9) um einen ersten Mittelpunkt (M1) sowie eine äußere Freifläche (10);
eine innere sphärische Steuerfläche (16) um einen zweiten Mittelpunkt (M2); wobei der erste Mittelpunkt (M1) und der zweite Mittelpunkt (M2) jeweils mit axialem Abstand zur Fenstermittenebene (E) liegen;
eine erste Stirnfläche (6) und eine zur ersten Stirnfläche (6) entgegengesetzt gerichtete zweite Stirnfläche (8)
**dadurch gekennzeichnet,**
**daß** zumindest die äußere Freifläche (10), ausgehend von einem vorgeformten Rohteil (102), mechanisch unbearbeitet ist.

2. Kugelkäfig nach Anspruch 1,
**dadurch gekennzeichnet,**
**daß** die äußere Freifläche (10) konisch ist.

3. Kugelkäfig nach Anspruch 1 oder 2,
**dadurch gekennzeichnet,**
**daß** die äußere Freifläche (10) axial im Bereich eines Ringsteges (13) liegt, der zwischen der zweiten Stirnfläche (8) und den Fenstern (3) gebildet ist.

4. Kugelkäfig nach einem der Ansprüche 1 bis 3,
**dadurch gekennzeichnet,**
**daß** sich die äußere Freifläche (10) sich etwa bis zu einer Ebene erstreckt, welche durch Seitenwände (15) der Fenster (3) definiert wird.

5. Kugelkäfig nach einem der Ansprüche 1 bis 4
**dadurch gekennzeichnet,**
**daß** eine Konusfläche (11) vorgesehen ist, die einerseits tangential an die sphärische Steuerfläche (9) anschließt und die sich anderseits bis zur äußeren Freifläche (10) erstreckt.

6. Kugelkäfig nach Anspruch 5,
**dadurch gekennzeichnet,**
**daß** die äußere Freifläche (10) gegenüber der Konusfläche (11) nach innen abgesetzt ist.

7. Kugelkäfig nach einem der Ansprüche 5 oder 6,
**dadurch gekennzeichnet,**
**daß** die äußere Freifläche (10) zur Konusfläche (11) parallel verläuft.

8. Kugelkäfig nach Anspruch 1 oder 2,
**dadurch gekennzeichnet,**
**daß** sich die äußere Freifläche (10) über den Ringsteg (13) hinaus axial bis in den Bereich der Fenster (3) erstreckt.

9. Kugelkäfig nach Anspruch 8,
**dadurch gekennzeichnet,**
**daß** die äußere Freifläche (10) gegenüber einer Tangente an die sphärische Steuerfläche (9) nach innen abgesetzt ist.

10. Verfahren zur Herstellung eines Kugelkäfigs für ein Gleichlaufdrehgelenk mit folgenden Verfahrensschritten:
Bereitstellen eines vorgeformten ringförmigen Rohteils (102) mit einer Außenfläche, einer Innenfläche, einer ersten Endfläche (6) und einer zweiten Endfläche (8), wobei die Außenfläche eine sphärische Fläche (109) und eine Freifläche (10) umfaßt,
mechanische Bearbeitung der sphärischen Fläche (109) zur Erzeugung einer sphärischen Steuerfläche (9), wobei die Freifläche (10) mechanisch unbearbeitet bleibt.

11. Verfahren nach Anspruch 10,
**dadurch gekennzeichnet,**
**daß** das vorgeformte ringförmige Rohteil (102) außen eine konische Fläche (111) aufweist, die zwischen der äußeren Freifläche (10) und der sphärischen Fläche (109) angeordnet ist und die tangential an die sphärische Fläche (109) anschließt,
wobei die konische Fläche (111) gemeinsam mit der sphärischen Fläche (109) mechanisch bearbeitet wird, wobei durch Bearbeitung der konischen Fläche (111) eine Konusfläche (11) erzeugt wird.

12. Verfahren nach Anspruch 10 oder 11,
**dadurch gekennzeichnet,**
**daß** zwischen der äußeren Freifläche (10) und der Konusfläche (11) im Längsschnitt betrachtet eine Stufe (12) vorgesehen ist, wobei die äußere Freifläche (10) gegenüber der Konusfläche (11) nach radial innen zurückversetzt ist.

13. Verfahren nach einem der Ansprüche 10 bis 12,
**dadurch gekennzeichnet,**
**daß** die Innenfläche des Rohteils (102) eine innere Freiformfläche (116) und eine an diese anschließende Erweiterungsfläche (14) aufweist,
wobei als weiterer Verfahrensschritt vorgesehen ist:
Mechanische Bearbeitung der inneren Freiformfläche (116), wobei eine sphärische innere Steuerfläche (16) erzeugt wird.

14. Verfahren nach einem der Ansprüche 10 bis 13,
**dadurch gekennzeichnet,**
**daß** von den Flächen Erweiterungsfläche (14), erste Stirnfläche (6) und zweite Stirnfläche (8), zumindest eine Fläche, ausgehend vom vorgeformten Rohteil (102), mechanisch unbearbeitet bleibt.

15. Verfahren nach einem der Ansprüche 10 bis 14,
**dadurch gekennzeichnet,**
**daß** zumindest ein Abschnitt der inneren Freiformfläche (116), der zur sphärischen inneren Steuerfläche (16) axial benachbart liegt, ausgehend vom vorgeformten Rohteil (102), mechanisch unbearbeitet bleibt. i

16. Gleichlaufdrehgelenk umfassend
ein Gelenkaußenteil (23) mit einer inneren Führungsfläche (26), in der äußere Kugelbahnen (27) ausgebildet sind,
ein Gelenkinnenteil (24) mit einer äußeren konvexen Führungsfläche (31), in der längsverlaufende innere Kugelbahnen (32) ausgebildet sind,
drehmomentübertragende Kugeln (25), die in aus jeweils einer äußeren Kugelbahn (27) und einer inneren Kugelbahn (32) gebildeten Kugelbahnen laufen,
einen Kugelkäfig (2) nach einem der Ansprüche 1 bis 9, der zwischen dem Gelenkaußenteil (23) und dem Gelenkinnenteil (24) angeordnet ist, wobei die drehmomentübertragenden Kugeln (25) in den Fenstern (3) des Kugelkäfigs (2) aufgenommen sind.

## Claims

1. A ball cage for a constant velocity universal joint comprising
a plurality of circumferentially distributed windows (3) for receiving torque transmitting balls (25), wherein the windows (3), jointly, define a central window plane (E);
an outer spherical control face (9) around a first centre (M1), and an outer free face (10);
an inner spherical control face (16) around a second centre (M2);
wherein the first centre (M1) and the second centre (M2) are each positioned at an axial distance from the central window plane (E);
a first end face (6) and an opposite second end face (8),
**characterised in**
**that** at least the outer free face (10), starting from a preformed blank (102), remains unmachined.

2. A ball cage according to claim 1,
**characterised in**
**that** the outer free face (10) is conical.

3. A ball cage according to claim 1 or 2,
**characterised in**
**that** the outer free face (10) is axially positioned in the region of an annular web (13) which is formed between the second end face (8) and the windows (3).

4. A ball cage according to any one of claims 1 to 3,
**characterised in**
**that** the outer free face (10) extends approximately as far as a plane which is defined by side walls (15) of the windows (3).

5. A ball cage according to any one of claims 1 to 4,
**characterised in**
**that** there is provided a cone face (11) which, on one side, adjoins tangentially the spherical control face (9) and which, on another side, extends as far as the outer free face (10).

6. A ball cage according to claim 5,
**characterised in**
**that**, relative to the cone face (11), the outer free face (10) is stepped inwardly.

7. A ball cage according to any one of claims 5 or 6,
**characterised in**
**that** the outer free face (10) extends parallel to the cone face (11).

8. A ball cage according to claim 1 or 2,
**characterised in**
**that** the outer free face (10) extends axially beyond the annular web (13) as far as and into the region of the windows (3).

9. A ball cage according to claim 8,
**characterised in**
**that**, relative to a tangent at the spherical control face (9), the outer free face (10) is stepped inwardly.

10. A process of producing a ball cage for a constant velocity universal joint with the following process stages:
providing a preformed annular blank (102) with an outer face, an inner face, a first end face (6) and a second end face (8), wherein the outer face comprises a spherical face (109) and a free face (10);
machining the spherical face (109) for producing a spherical control face (9), wherein the free face (10) remains unmachined.

11. A process according to claim 10,
**characterised in**
**that**, on its outside, the preformed annular blank (102) comprises a conical face (111) which is arranged between the outer free face (10) and the spherical face (109) and which tangentially adjoins the spherical face (109), wherein the conical face (111) is machined jointly with the spherical face (109), wherein a cone face (11) is produced by machining the conical face (111).

12. A process according to claim 10 or 11,
**characterised in**
**that**, if viewed in a longitudinal section, a step (12) is provided between the outer free face (10) and the cone face (11), wherein the outer free face (10) is radially inwardly set back relative to the cone face (11).

13. A process according to any one of claims 10 to 12,
**characterised in**
**that** the inner face of the blank (102) comprises an inner free-form face (116) and a widening face (14) adjoining said free-form face (116),
wherein there is provided a further process stage:
machining the inner free-form face (116), whereby there is produced a spherical inner control face (16).

14. A process according to any one of claims 10 to 13,
**characterised in**
**that** of the widening face (14), the first end face (6) and the second end face (8), at least one face, starting from the preformed blank (102), remains unmachined.

15. A process according to any one of claims 10 to 14,
**characterised in**
**that** at least one portion of the inner free-form face (116), which axially adjoins the spherical inner control face (16), remains unmachined, starting from the preformed blank (102).

16. A constant velocity universal joint comprising
an outer joint part (23) with an inner guiding face (26) in which there are formed outer ball tracks (27);
an inner joint part (24) with an outer convex guiding face (31) in which there are formed longitudinally extending inner ball tracks (32);
torque transmitting balls (25) which are guided in ball tracks each formed of an outer ball track (27) and an inner ball track (32);
a ball cage (2) according to any one of claims 1 to 9, which ball cage (2) is arranged between the outer joint part (23) and the inner joint part (24), wherein the torque transmitting balls (25) are received in the windows (3) of the ball cage (2).

## Revendications

1. Cage à billes pour un joint homocinétique, comprenant plusieurs fenêtres (3) réparties en périphérie pour recevoir des billes (25) qui transmettent un couple de rotation, lesdites fenêtres (3) définissant conjointement un plan médian de fenêtres (E) ;
une surface de commande sphérique extérieure (9) autour d'un premier centre (M1) ainsi qu'une surface libre extérieure (10) ;
une surface de commande sphérique intérieure (16) autour d'un second centre (M2) ;
dans laquelle le premier centre (M1) et le second centre (M2) sont disposés respectivement avec une distance axiale par rapport au plan médian de fenêtres (E) ;
une première surface frontale (6) et une seconde surface frontale (8) dirigée en sens opposé à la première surface frontale (6) **caractérisée en ce que**
au moins la surface libre extérieure (10), partant d'une pièce brute préformée (102), ne présente pas d'usinage mécanique.

2. Cage à billes selon la revendication 1,
**caractérisée en ce que** la surface libre extérieure (10) est conique.

3. Cage à billes selon la revendication 1 ou 2,
**caractérisée en ce que** la surface libre extérieure (10) est située axialement dans la région d'une barrette annulaire (13) qui est formée entre la seconde surface frontale (8) et les fenêtres (3).

4. Cage à billes selon l'une des revendications 1 à 3,
**caractérisée en ce que** la surface libre extérieure (10) s'étend approximativement jusqu'à un plan qui est défini par des parois latérales (15) des fenêtres (3).

5. Cage à billes selon l'une des revendications 1 à 4,
**caractérisée en ce qu'**il est prévu une surface en cône (11) qui se raccorde d'une part tangentiellement à la surface de commande sphérique (9) et qui s'étend d'autre part jusqu'à la surface libre extérieure (10).

6. Cage à billes selon la revendication 5,
**caractérisée en ce que** la surface libre extérieure (10) est en retrait vers l'intérieur par rapport à la surface en cône (11).

7. Cage à billes selon l'une des revendications 5 ou 6,
**caractérisée en ce que** la surface libre extérieure (10) s'étend parallèlement à la surface en cône (11).

8. Cage à billes selon la revendication 1 ou 2,
**caractérisée en ce que** la surface libre extérieure (10) s'étend au-delà de la barrette annulaire (13) axialement jusque dans la zone des fenêtres (3).

9. Cage à billes selon la revendication 8,
**caractérisée en ce que** la surface libre extérieure (10) est en retrait vers l'intérieur par rapport à une tangente à la surface de commande sphérique (9).

10. Procédé pour la fabrication d'une cage à billes pour un joint homocinétique, comprenant les étapes de procédé suivantes :
préparation d'une pièce brute préformée (102) de forme annulaire avec une surface extérieure, une surface intérieure, une première surface terminale (6) et une seconde surface terminale (8), la surface extérieure présentant une surface sphérique (109) et une surface libre (10),
usinage mécanique de la surface sphérique (109) pour engendrer une surface de commande sphérique (9), dans lequel la surface libre (10) reste sans usinage mécanique.

11. Procédé selon la revendication 10,
**caractérisé en ce que** la pièce brute préformée (102) de forme annulaire présente à l'extérieur une surface conique (111) qui est agencée entre la surface libre extérieure (10) et la surface sphérique (109) et qui se raccorde tangentiellement à la surface sphérique (109),
dans lequel la surface de conique (111) et usiner mécaniquement conjointement avec la surface sphérique (109), et dans lequel une surface en cône (11) est engendrée par l'usinage de la surface conique (111).

12. Procédé selon la revendication 10 ou 11,
**caractérisé en ce qu'**il est prévu un gradin (12), entre la surface libre extérieure (10) et la surface en cône (11), observé en couple longitudinal, et la surface libre extérieure (10) est en retrait radialement vers l'intérieur par rapport à la surface en cône (11).

13. Procédé selon l'une des revendications 10 à 12, **caractérisé en ce que** la surface intérieure de la pièce brute (102) présente une surface intérieure à forme libre (116), et une surface d'élargissement (14) qui se raccorde à celle-ci,
et dans lequel il est prévu à titre d'étape de procédé supplémentaire :
un usinage mécanique de la surface intérieure (116) à forme libre, tel que l'on engendre une surface de commande intérieure sphérique (16).

14. Procédé selon l'une des revendications 10 à 13,
**caractérisé en ce que** parmi les surfaces que sont la surface d'élargissement (14), la première surface frontale (6) et la seconde surface frontale (8), au moins une surface, partant de la pièce brute préformée (102), reste sans usinage mécanique.

15. Procédé selon l'une des revendications 10 à 14,
**caractérisé en ce qu'**au moins un tronçon de la surface intérieure (116) à forme libre, qui est situé axialement voisin de la surface de commande intérieure sphérique (16), partant de la pièce brute préformée (102), reste sans usinage mécanique.

16. Joint homocinétique comprenant
une partie extérieure de joint (23) avec une surface de guidage intérieure (26) dans laquelle sont ménagées des pistes à billes extérieure,
une partie intérieure de joint (24) avec une surface de guidage convexe extérieure (31) dans laquelle sont ménagées des pistes à billes intérieures s'étendant longitudinalement,
des billes (25) qui transmettent un couple de rotation et qui se déplacent dans des pistes à billes formées respectivement d'une piste à bille extérieure (27) et une piste à bille intérieure (32),
une cage à billes (2) selon l'une des revendications 1 à 9, qui est agencée entre la partie extérieure de joint (23) et la partie intérieure de joint (24), les billes (25) qui transmettent un couple de rotation étant reçues dans les fenêtres (3) de la cage à billes (2).
